Europäisches Patentamt

European Patent Office

Office européen des brevets

(19)

(11) Veröffentlichungsnummer: **0 212 167 B1**

# (12) EUROPÄISCHE PATENTSCHRIFT

(45) Veröffentlichungstag der Patentschrift: **04.04.90**

(21) Anmeldenummer: **86109004.1**

(22) Anmeldetag: **02.07.86**

(51) Int. Cl.⁵: **B 64 C 21/10**

(54) **Einrichtung zur Verringerung des Reibungswiderstandes.**

(30) Priorität: **06.08.85 DE 3528135**

(43) Veröffentlichungstag der Anmeldung:
**04.03.87 Patentblatt 87/10**

(45) Bekanntmachung des Hinweises auf die
Patenterteilung:
**04.04.90 Patentblatt 90/14**

(84) Benannte Vertragsstaaten:
**DE FR GB IT NL**

(56) Entgegenhaltungen:
**DE-A-1 923 633**
**FR-A- 494 840**
**US-A-2 322 632**

**AIAA 21st AEROSPACE SCIENCES MEETING,
Reno, 10.-13. Januar 1983, Nr. AIAA-83-0227,
Seiten 6,18, American Institute of Aeronautics
and Astronautics, New York, US; D.M.
BUSHNELL et al.: "Turbulent drag reduction for
external flows"**

(73) Patentinhaber: **Messerschmitt-Bölkow-Blohm
Gesellschaft mit beschränkter Haftung
Robert-Koch-Strasse
D-8012 Ottobrunn (DE)**

(72) Erfinder: **Löbert, Gerhard, Dr.-Ing.
Otterweg 48
D-8011 Baldham (DE)**
Erfinder: **Bschorr, Oskar, Dr. rer.nat.
Keplerstrasse 11
D-8000 München 80 (DE)**
Erfinder: **Spies, Hans, Dipl.-Ing.
Schiessstätte 12
D-8068 Pfaffenhofen (DE)**

Courier Press, Leamington Spa, England.

**Beschreibung**

Die Erfindung bezieht sich auf eine Einrichtung zur Verringerung des strömungsmechanischen Reibungswiderstandes bei Luft-, Raum- und Wasserfahrzeugen.

Die Haftbedingung der Strömungsmechanik besagt, daß am Übergang vom strömenden Medium zur Wand Strömungsgeschwindigkeit und Wandgeschwindigkeit identisch sind. Als Folge der Haftbedingung und der Zähigkeit schleppt jeder Körper, der durch ein ruhendes Medium bewegt wird, einen Teil dieses Mediums neben und hinter sich her und wird dadurch abgebremst. Der Reibungswiderstand vom Luft- und Wasserfahrzeugen ist somit eine direkte Auswirkung der strömungsmechnischen Haftbedingung.

Mehr als die Hälfte des in der Luftfahrt verbrauchten Kraftstoffes wird für die Überwindung des Reibungswiderstandes benötigt. Wäre es möglich, einen gewissen Schlupf zwischen der strömenden Luft und der Flugzeugoberfläche herzustellen, so ließe sich der Reibungswiderstand verringern und die Wirtschaftlichkeit von Flugzeugen beträchtlich steigern. Die relative Widerstandsverringerung betrüge

$$\frac{\Delta W_{Reibung}}{W_{Reibung}} \simeq 1 - (1 - \frac{V_{Schlupf}}{V_\infty})^2 \qquad (1)$$

Das Haften der wandnahen Flüssigkeits — oder Gasteilchen ist auf die Affinität zwischen den Molekülen des strömenden Mediums und den Atomen der Wand zurückzuführen.

Aus der FR—PS 494 840 ist für einen Tragflügel eine Einrichtung gemäß dem Oberbegriff des Anspruchs 1 bekannt, die jedoch im cm- oder gar im Dezimeterbereich ausgeführt ist. Abgesehen von einer zweifelhaften Verbesserung des Reibungswiderstandes, muß hier in die Flügelgesamtmonzeption eingegriffen werden.

Aus der Publikation AIAA'83—0227 ''Turbulent Drag Reduction for External Flows'' AIAA 21st Aerospace Sciences Meeting, Reno 10-13 Jannar, American Institute of Aeronautics and Astronautics, New York, US sind Riblets bekanntgeworden,, die eine strömungsparallele Ausbildung in Längsrichtung aufweisen. Eine optimale Verbesserung des strömungsmechanischen Reibungswiderstandes ist aber auch hier noch nicht zu erzielen.

Der vorliegenden Erfindung liegt die Aufgabe zugrunde, den strömungsmechanischen Reibungswiderstand bei Luft-, Raum- und Wasserfahrzeugen im Sinne einer weiteren Kraftstoffersparnis zu verbessern, ohne daß hierfür wesentliche Aufwendungen erforderlich sind, d.h. in die Fahrzeug-Gesamtkonzeption eingegriffen werden muß.

Diese Aufgabe wird durch die im Anspruch 1 aufgeführten Maßnahmen gelöst. In den Unteransprüchen sind vorteilhafte Ausgestaltungen angegeben und in der Beschreibung wird ein Ausführungsbeispiel für gasförmige Median erläutert, die Berechnungsgrundlagen gegeben sowie durch die Figuren der Zeichnung ergänzt. Es zeigen.

Fig. 1 ein Diagramm über das Verhältnis der Schlupfgeschwindigkeit zur mittleren thermischen Molekülgeschwindigkeit c in Abhängigkeit vom Neigungswinkel der Rampe (α),

Fig. 2 ein Diagram über den Einfluß des Neigungswinkels β der kurzen Seite eines Dreieckprofils auf die Schlupfgeschwindigkeit,

Fig. 3 ein Diagram über die Abhängigkeit der relativen Widerstandsverringerung von $M_\infty$,

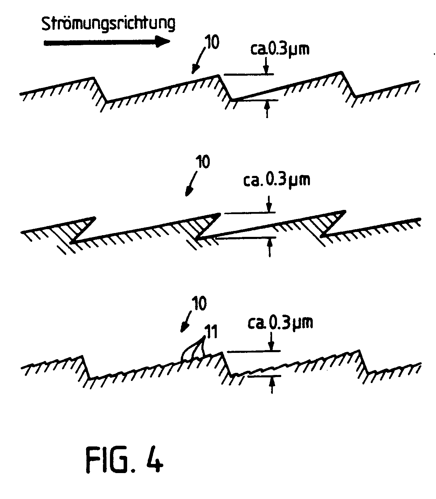

Fig. 4 Ausführungsbeispiele von mikrokopischer Feinstrukturierung einer Fahrzeugoberfläche,

Fig. 5 Ausführungsbeispiele von makroskopischer Feinstrukturierung einer Fahrzeugoberfläche,

Fig. 6 eine Skizze für die Orientierung des der Berechnung zugrundeliegenden kartesischen Achsenkreuzes relativ zum Profil und zum Geschwindigkeitsvektor.

Grundsätzlich ist zu sagen, daß jedes auf die Körperoberfläche auftreffende Molekül dort festgehalten wird und nach einer kurzen Verweilzeit mit einer statistisch verteilten Geschwindigkeit in eine statistisch verteilte Richtung emittiert wird. Bei einer ebenen glatten Wand oder einer ebenen rauhen Wand mit statistisch verteilter Oberflächenneigung ist der mittlere Massen- und Impulsfluß der reflektierten Moleküle senkrecht zur Mittelebene der Wand gerichtet, so daß die mittlere Geschwindigkeit der in Wandnähe sich befindenden Moleküle mit der Wandgeschwindigkeit identisch ist.

Hiervon ausgehend, wird nachstehend die Berechnung des Wandschlupfes gegeben, die für den Grenzfall einer gegenüber der freien Weglänge verschwindend kleinen Profilabmessung gilt, denn der allgemeine Erfindungsgedanke sieht vor, daß die Körperoberfläche mit einer asymmetrischen Feinstruktur, z.B. mit feinen Querrillen mit Sägezahnprofil versehen wird, so daß die mittlere Relativgeschwindigkeit der reflektierten Teilchen aufgrund der asymmetrischen Emissionsverhältnisse eine Komponente parallel zur Wand aufweist. Auf diese Weise kann die strömungsmechanische Haftbedingung teilweise aufgehoben werden. Die vorgeschlagene Maßnahme ist nur dann wirksam, wenn die charakteristische Abmessung des Rillenprofils die mittlere freie Weglänge der Gasmoleküle nicht wesentlich überschreitet.

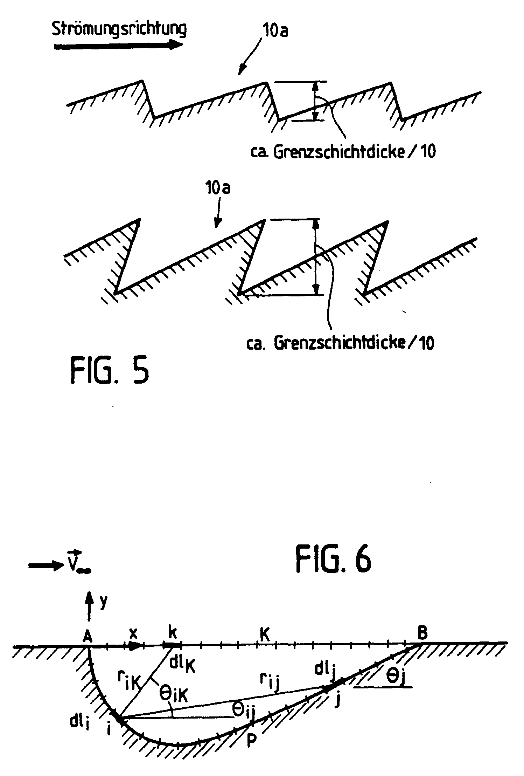

In einer ebenen, längsangeströmten Wand befindet sich eine konkave, zylindrische Aussparung beliebiger Form. Die in Fig. 6 dargestellte Skizze zeigt die Orientierung des verendeten kartesischen Achsenkreuzes relativ zum Profil und zum Geschwindigkeitsvektor. Die verwendeten Bezeichnungen gehen ebenfalls aus dieser Skizze hervor.

Die Strecke AKB und die Kontur APB werden in M- bzw. N-Teilstrecken gleichmäßig unterteilt, wobei das Verhältnis M/N so gewählt wird, daß alle Teilstrecken nahezu gleich lang sind.

Durch die k-te-Teilstrecke der Kontur AKB tritt je Zeiteinheit die Molekülzahl n $\bar{c}$ $dl_k$ in Richtung der Kontur APB (n = Moleküldichte $\bar{c}$ = mittlere Molekülgeschwindigkeit). Die Translationsgeschwindigkeit $\vec{V}$ hat keinen Einfluß auf dieses Ergebnis. Da die Flugrichtungen der einfallenden Moleküle in einem mit $\vec{V}$ bewegten Be- zugssystem isotrop verteilt sind, trifft auf die i-te-Teilstrecke der Kontur APB der Bruchteil

$$\frac{1}{\pi}\left[\frac{dl_i}{r_{ik}}\sin\left(\theta_{ik}-\theta_i\right)\right]\left[\frac{\pi}{2}\sin\left(\theta_{ik}-\frac{V}{c}\sin\theta_{ik}\right)\right] \qquad (2)$$

dieses Molekülstroms. Für kleine Werte von $r_{ik}$ ist der Ausdruck in der ersten eckigen Klammer durch den genauen Winkel

$$\text{arcos}\ \frac{r_1^2 + r_2^2 - dl_i^2}{2\ r_1\ r_2} \qquad (3a)$$

$$r_{1,\ 2} = \left|\ \vec{r}_{ik}\ \pm\ \vec{dl}_i\ /2\ \right| \qquad (3b)$$

zu ersetzen.

Die Molekülströme, die das i-te- bzw. j-te-Konturelement verlassen, werden mit $\dot{m}_i$ und $\dot{n}_j$ bezeichnet. Es wird davon ausgegangen, daß die Flugrichtungen der emittierten Teilchen gemäß dem Lambert'schen cos-Gesetz verteilt sind.

Der Molekülausstoß des j-ten-Elements führt am Ort des i-ten- bzw. k-ten-Elements zu den Molekülflüssen

$$\dot{n}_j \bullet \frac{1}{\pi}\left[\frac{dl_i}{\theta_{ij}}\sin\left(\theta_i-\theta_{ij}\right)\right]\left[\frac{\pi}{2}\left|\sin\left(\theta_1-\theta_{ij}\right)\right|\right]$$

**bzw.** $\qquad (4)$

$$\dot{n}_j \bullet \frac{1}{\pi}\left[\frac{dl_k}{r_{jk}}\sin\theta_{jk}\right]\left[\frac{\pi}{2}\left|\sin\left(\theta_j-\theta_{jk}\right)\right|\right]$$

Bei kleinen Werten von $r_{ij}$ bzw. $_{ik}$ sind die Ausdrücke in den ersten eckigen Klammern durch

$$\text{arcos}\ \frac{r_1^2 + r_2^2 - dl_{i,\ k}^2}{2\ r_1\ r_2} \qquad (5a)$$

zu ersetzen wobei $R_{1,2}$ in diesem Fall durch

$$r_{1,\ 2} = \left|\ \vec{r}_{ij}\ \text{bzw.}\ \vec{r}_{ik}\ \pm\ \vec{dl}_i\ \text{bzw.}\ \vec{dl}_k\ \right| \qquad (5b)$$

gegeben sind.

Aus dem Erhaltungssatz für die Zahl der Moleküle erhält man bei stationärer Strömung für das i-te-Konturelement

$$\overset{\bullet}{n} = \frac{n\,\bar{c}\,dl_i}{2} \sum_{k=1}^{M} \frac{dl_k}{\pi r_{ik}} \sin\left(\theta_{ik}-\theta_i\right) \cdot \frac{\pi}{2}\left|\sin\left(\theta_{ik} - \frac{v}{c}\sin\theta_{ik}\right)\right|$$

$$+ \sum_{j=1}^{N} \overset{\bullet}{n}_j \frac{dl_i}{\pi r_{ik}} \sin\left(\theta_i-\theta_{ij}\right)\cdot\frac{\pi}{2}\left|\sin\left(\theta_j-\theta_{ij}\right)\right| \qquad (6)$$

$$i = 1,\ 2\ldots N$$

wobei in der zweiten Summation der Fall i = j auszuschließen ist.

Die Beziehung (6) stellt ein lineares Gleichungssystem für die N unbekannten Molekülergiebigkeiten $\overset{\bullet}{n}_j$ dar. Nach dessen Auflösung ergeben sich die Normal- und Tangentialkomponenten des durch die Kontur AKB austretenden Molekülflusses zu

$$\overset{\bullet}{n}_\perp = \sum_{k=1}^{M} \sum_{i=1}^{N} \overset{\bullet}{n}_i \frac{dl_k}{\pi r_{ik}} \sin^2\theta_{ik} \cdot \frac{\pi}{2}\left|\sin\left(\theta_i-\theta_{ik}\right)\right| \qquad (7)$$

$$\overset{\bullet}{n}_{\|} = \sum_{1}^{M} \sum_{1}^{N} \overset{\bullet}{n}_i \frac{dl_k}{\pi r_{ik}} \sin\theta_{ik} \cos\theta_{ik} \frac{\pi}{2}\left|\sin\left(\theta_i-\theta_{ik}\right)\right|$$

Für die mittlere Tangentialgeschwindigkeit der emittierten Moleküle erhält man

$$V_{Schlupf}\ (V) = \frac{\overset{\bullet}{n}_{\|}}{\overset{\bullet}{n}_\perp}\ \bar{c} \qquad (8)$$

Die Berechnung von $V_{Schlupf}$ läuft nach dem folgenden Iterationsschema ab.

$$V_{Schlupf(n+1)} = V_{Schlupf}\ (V = V_{Schlupf(n)}) \qquad (9)$$

wobei im ersten Schritt V = O gesetzt wird. Da $\partial V_{Schlupf}/\partial V \ll 1$ benötigt das Verfahren im allgemeinen nur zwei Iterationsschritte.

(In der Regel ist $V_{Schlupf} \approx 0.96\ V_{Schlupf_1}$).

Zunächst wird das dreieckige prismatische Profil mit senkrechter Flanke und geneigter Rampe untersucht. Bei dieser Konfiguration wirkt die Molekülemission der Flanke im Sinne einer positiven Schlupfgeschwindigkeit, während die Emission der Rampe im umgekehrten Sinne wirkt. Wie die folgenden Ergebnisse zeigen, überwiegt der Einfluß der senkrechten Flanke.

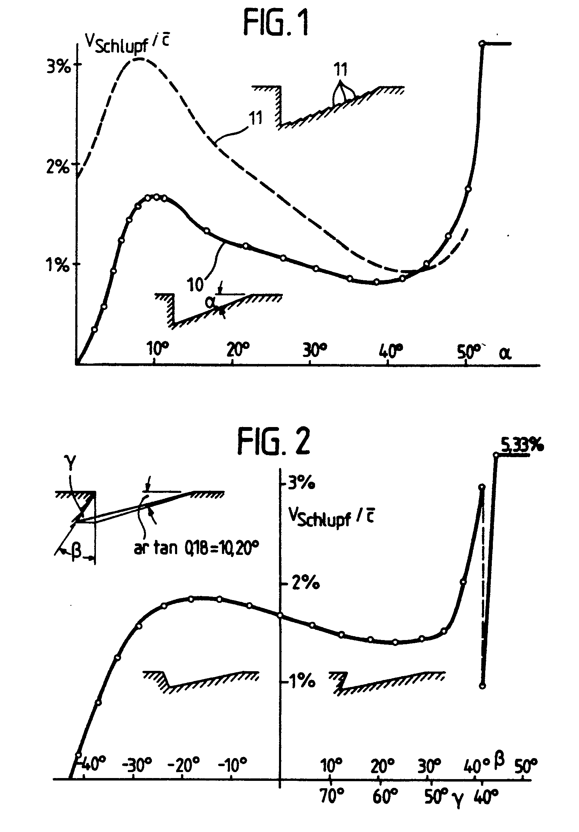

Fig. 1 zeigt das Verhältnis der Schlupfgeschwindigkeit zur mittleren thermischen Molekülgeschwindigkeit $\bar{c}$ in Abhängigkeit vom Neigungswinkel der Rampe, $\alpha$ der asymmetrischen Feinstruktur 10. Bei diesen Rechnungen betrug M = N = 50. Wie man sieht, steigt die schlupfgeschwindigkeit mit größer werdendem $\alpha$ steil an, erreicht einen Maximalwert von 1.7% $\bar{c}$ bei $\alpha = 10°$, sinkt dann wieder auf 0.83% $\bar{c}$ ab, um danach erneut anzusteigen. Der steile Anstieg oberhalb $\alpha = 50°$ ist darauf zurückzuführen, daß sich in diesem Winkelbereich sehr hohe Teilchendichten in der Umgebung der inneren Profilecke ausbilden, die zu einem Kräftigen Molekülflüß in Richtung der Winkelhalbierenden führen. Bei α = 52.1° wird die Moleküldichte in der Ecke singulär. Hier erreicht $V_{Schlupf}$ einen Wert von 3.25% $\bar{c}$.

An dieser Stelle sei angemerkt, daß die digitale Simulation der Bewegung eines Moleküls zwischen einer ebenen Wand und einer benachbarten Wand mit Sägezahnprofil ähnliche Driftgeschwindigkeiten liefert. Aufgrund der starken statistischen Schwankung der Ergebnisse kann die digitale Simulation jedoch nur Näherungswerte für die Schlupfgeschwindigkeit liefern.

Fig. 2 zeigt den Einfluß des Neigungswinkels der kurzen Seite des Dreiecksprofils auf die Schlupfgeschwindigkeit bei einem mittleren Rampenwinkel von α = 10.2°.

Wie man sieht, läßt sich der Schlupf durch Vergrößerung des Winkels zwischen beiden Flächen geringfügig auf 1.85% $\bar{c}$ erhöhen. Interessanter ist die Neigungsänderung in umgekehrter Richtung. Mit zunehmender Zuspitzung der inneren Ecke nimmt der Schlupf zunächst etwas ab, steigt dann aber Steil an, wenn sich der Eckenwinkel γ dem Wert 35° nähert. In diesem Winkelbereich kommt es zu einer starken Wechselwirkung zwischen beiden Ankatheten der inneren Ecke, was eine Kräftige Zunahme der örtlichen Emissionsströme zur Folge hat. Die Moleküle verlassen die Engstelle in Form eines relativ scharf gebündelten, stromabwärts gerichteten Strahls, der einen wesentlichen Beitrag zu $V_{Schlupf}$ liefert.

Eine genaue Untersuchung des Winkelbereiches um 35° zeigt, daß die Teilchendichte in der Ecke bei einem Eckenwinkel von 36.7° singulär wird. Bei diesem Winkel beträgt der Schlupf 5.33% $\bar{c}$. Für spitzere Winkel gibt es keine stationäre Lösung für das vorliegende Strömungsproblem. Es kommt zu einem stetigen Molekülfluß in Richtung der Engstelle, der schließlich zu einer effektiven Ausrundung der Ecke führt. Auf diese Weise wird jede spitze Ecke, die einen Winkel von weniger als 36.7° aufweist, selbsttätig entschärft. Unklar ist der Verlauf des Schlupfes in diesem Winkelbereich. Es dürfte sich jedoch nicht wesentlich von dem Grenzwert 5.33% $\bar{c}$ unterscheiden.

Die Wirksamkeit des asymmetrischen Dreieckprofils läßt sich dadurch steigern, daß die Rampe mit einer Reihe von asymmetrischen Dreiecksrillen als Subrillen 11 versehen wird. Dadurch wird eine geringfügige Drehung der mittleren Emissionsrichtung der Moleküle erreicht. Die gestrichelte Kurve in Fig. 1 zeigt den mit dieser Maßnahme realisierbaren Schlupf. Die Subrillen 11 sind so geformt, daß sie, isoliert betrachtet, einen Schlupf von 1.85% $\bar{c}$ erzeugen würden. Dies entspricht einer Winkeldrehung von 2.1°.

Fig. 1 zeigt, daß sich die Wirkungen der großen und der kleinen Rillen bei sehr kleinen Rampenwinkeln nahezu additiv überlagern. Bei größeren Winkeln wird dieser Summenwert nicht erreicht. Kombiniert man Fig. 1 mit Fig. 2, so sieht man, daß mit dem zweistufigen asymmetrischen Dreiecksprofil ein Schlupf von 3.2% $\bar{c}$ erzielt werden kann, ohne daß die verstärkende Wirkung von hinterschnittenen Ecken dabei hinzugenommen wird.

Die folgende Untersuchung wird für zwei Werte der Shlupfgeschwindigkeit durchgeführt. Der Wert 3.2% $\bar{c}$ entspricht dem unkomplizierten zweistufigen Dreiecksprofil. Der zweite Wert von 5.3% $\bar{c}$ gilt für das einstufige Profil mit spitzer Innenecke.

Zwischen der Schallgeschwindigkeit für ein zweiatomiges Gas, a, und der mitteren Molekülgeschwindigkeit $\bar{c}$ besteht folgender Zusammenhang

$$\bar{c} = \sqrt{40/7\pi} \ a = 1.349 \ a \qquad (10)$$

Somit beträgt die Schlupfgeschwindigkeit

$$V_{Schlupf} = 0.0432 \ a \ \text{bzw.} \ 0.0715 \ a \qquad (11)$$

Für eine mit $V_\infty$ längsangeströmte ebene Platte kann die Widerstandsverringerung durch Schlupf näherungsweise nach G1. 1 berechnet werden. Ersetzt man $V_\infty$ durch $M_\infty a$ und $V_{Schlupf}$ durch die Ausdrücke (11), dann erhält man

$$\frac{\Delta W}{W} = 1 - \left(1 - \frac{0.0432 \ \text{bzw.} \ 0.0715}{M_\infty}\right)^2 \qquad (12)$$

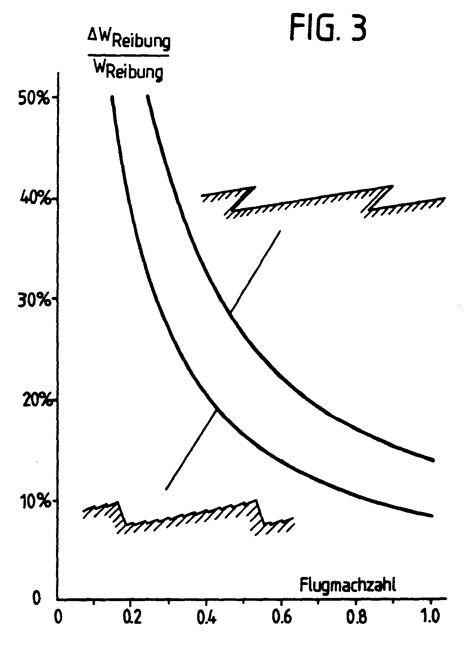

Fig. 3 zeigt die Abhängigkeit der relativen Widerstandsverringerung von $M_\infty$. Bei einer Flugmachzahl von 0.85 kann der Reibungswiderstand um 9.9% bzw. 16.1% verringert werden.

Das Konzept der asymmetrischen Feinstrukturierung der Fahrzeugoberfläche ist nur dann voll wirksam, wenn die Rillentiefe die mittlere freie Weglänge der Luftmoleküle nicht Überschreitet. In einer Flughöhe von 11 km beträgt die mittlere freie Weglänge ca. 0.3 μm. Dieses bedeutet, daß die Abmessungen der Dreiecksrille ca. 0.3 μ × 1.5 μ betragen sollten. Eine solche Feinstruktur läßt sich sowohl mechanisch als auch auf phototechnischem Wege herstellen. (Zum Vergleich: Bei der Herstellung von Beugungsgittern werden Rillen der Abmessung 0.1 μ × 0.8 μ mit einer Profilgenauigkeit von 0.03 μ hergestellt. In optischen Geräten beträgt die Oberflächengüte 0.03 μ). Subrillen 11 der Größe 0.05 μ × 0.25 μ sind mit den in der Halbleitertechnik angewandten Methoden oder mit Elektronenstrahlen herstellbar. Rillen mit hinterschnittenen Flanken können durch die plastische Verformung von Dreiecksrillen mit senkrechten Flanken hergestellt werden.

5

Aus Kostengründen wird man asymmetrische Reinstrukturen 10 zunächst in jenen Bereichen des Flugzeugs anwenden, wo enteder eine dünne Grenzschicht mit hohem Reibwert oder eine hohe örtliche Geswindigkeit vorliegt. Dies sind die vorderen 60% der Flügeloberseite, die vorderen 40% der Leitwerksoberfläche sowie die vorderen 30% der Rumpfoberfläche.

Besonders wirksam ist das vorgeschlagene Konzept im Bereich der Flügelsaugseite wegen des hohen Widerstandsvergrößerungsfaktors in diesem Gebiet. Die vorsstehend für die Flugmachzahl M = 0.85 angegebenen Werte der relativen Widerstandsverringerung erhöhen sich für die Flügelsaugseite trotz der dort vorliegenden Überschallmachzahl auf 15% bis 24%. Im Reiseflug liefern die vorderen 60% der Flügeloberseite ca. 25% des gesamten Reibungswiderstandes des Flugzeuges, obwohl sie nur ca. 12% der bespülten Oberfläche ausmachen. Dies bedeutet, daß durch die Behandlung von nur 12% der Flugzeugoberfläche der Reibungswiderstand eines Transportflugzeuges um 3.8% bzw. 6% reduziert werden kann.

Bei Flüssigkeiten als umströmendes Medium ist es wegen der hohen Packungsdichte der Moleküle nicht möglich, einen Schlupf mit Hilfe von mikroskopischen Oberflächenstrukturen zu erzeugen. Hier wird vorgeschlagen, die Erzeugung eines Geschwindigkeitsschlupfes mit Hilfe von makroskopischen asymmetrischen Oberflächenfeinstrukturen 10a durchzuführen.

Ähnlich wie sich die Größe der mikroskopischen Rille an der freien Weglänge der Gasmoleküle zu orientieren hat, werden die Abmessungen von makroskopischen Strukturen in Relation zum Mischungsweg zu wählen sein. Der über die Grenzschichtdicke hinweg gemittelte Mischungsweg liegt bei ca. 10% der Grenzschichtdicke. Letztere wächst gemäß

$$\frac{d}{l} \sim (Re)^{-0.2} \bullet (x/l)^{0.8}$$

an, wobei x den Abstand vom vorderen Staupunkt und l die Körperlänge bezeichnen. Somit sollten die charakteristischen Profilabmessungen proportional

$$(x/l)^{0.8} \bullet Re^{0.2}$$

ansteigen. Die Proportionalitätskonstante und die günstigste Profilform sind im Experiment zu ermitteln.

Da der makroskopische Vorgang der Turbulenz sowohl bei Gasen als auch bei Flüssigkeiten auftritt, sind makroskopische asymmetrische Oberflächenstrukturen sowohl bei Luft- als auch bei Wasserfahrzeugen anwendbar.

Zur Fertigung und Ausbildung der asymmetrischen Feinstrukturen 10, 10a ist zu sagen, daß die makroskopische Feinstruktur 10a auch in Schuppenform — also dreidimensional — ausgeführt werden kann.

Hervorzuheben ist weiterhin, daß jede Abweichung vom Lambert'schen Emissionsgesetz in Richtung eine isotropen Verteilung die Wirksamkeit der asymmetrischen Struktur erhöht. Die Abstrahlung in tangentialer Richtung kann mit Hilfe von — auf der Oberfläche stochastisch verteilten — Kegelstüpfen erhöht werden.

Die vorgeschlagene Sägezahnstruktur kann nun in mannigfacher Weise auf die Oberfläche aufgebracht werden. Einmal also aufklebbare Folie oder durch Einprägen in die weiche Beplankung bzw. Lackschicht vor der Härtung. Sägezahnstrukturen mit stark zugespitzten Einbuchtungen können durch Nachwalzen des konventionellen Sägezahnprofils hergestellt werden. Auch ist eine Herstellung dieser Strukturen mittels Laser- oder Röntgen-Lithographie möglich. Eine weitere Herstellungsart ist durch asymmetrisches Sandstrahlen gegeben. Für spezielle Ausführungen kann eine asymmetrische Feinstruktur auch durch Aufbringung eines Faserpelzes mit stromabwärts gerichteten Fasern vorteilhaft sein und damit die Wirksamkeit aller der vorgenannten Feinstrukturen auch bei Regen erhalten bleibt, ist zu empfehlen, die gesamte Strukturoberfläche mit einem wasserabstoßenden Präparat zu imprägnieren.

**Patentansprüche**

1. Einrichtung zur Verringerung des strömungsmechanischen Reibungswiderstandes bei Luft-, Raum- und Wasserfahrzeugen mit einer auf der von einem Medium überströmten Oberfläche aufgebrachten, quer zur Strömungsrichtung verlaufenden asymmetrischen Feinstruktur (10, 10a) in Form einer Rillenprofils, dessen flachgeneigte Flanken angeströmt werden, dadurch gekennzeichnet, daß die Rillenhöhe die mittlere freie Weglänge der Moleküle des Mediums bzw. die mittlere freie Weglänge der Flüssigkeitsballen nicht wesentlich überschreitet.

2. Einrichtung nach Anspruch 1, dadurch gekennzeichnet, daß die asymmetrische Feinstruktur (10, 10a) zur Beeinflussung der mittleren Emissionsrichtung der Moleküle mikroskopisch oder zur Beeinflussung des Reflexionsverhaltens der Flüssigkeitsballen makroskopisch ausgeführt ist.

3. Einrichtung nach Anspruch 1 oder 2, dadurch gekennzeichnet, daß das Rillenprofil der asymmetrischen mikroskopischen Feinstruktur (10) zusätzlich mit asymmetrischen Subrillen (11) versehen ist.

# EP 0 212 167 B1

4. Einrichtung nach den Ansprüchen 2 bis 3, dadurch gekennzeichnet, daß das Rillenprofil der asymmetrischen makroskopischen Feinstruktur (10a) eine dreidimensionale Ausbildung aufweist.

5. Einrichtung nach den Ansprüchen 1 bis 4, dadurch gekennzeichnet, daß die asymmetrische Feinstruktur (10, 10a) eine Sägezahnstruktur aufweist und in Form von aufklebbaren Folien aufgebracht wird.

6. Einrichtung nach einem oder mehreren der Ansprüche 1 bis 5, dadurch gekennzeichnet, daß die asymmetrische Feinstruktur (10, 10a) durch Prägen, Walzen, Sandstrahlen oder mittels Laser- und/oder Röntgen-Lithographie hergestellt wird.

7. Einrichtung nach einem oder mehreren der Ansprüche 1 bis 6, dadurch gekennzeichnet, daß die asymmetrische Feinstruktur (10, 10a) als Faserpelz mit stromabwärts gerichteten Fasern ausgebildet ist.

8. Einrichtung nach einem oder mehreren der Ansprüche 1 bis 7, dadurch gekennzeichnet, daß die Oberfläche der asymmetrischen Feinstruktur (10, 10a) mit einer wasserabstoßenden Schicht belegt oder imprägniert ist.

9. Einrichtung nach einem oder mehreren der Ansprüche 1 bis 8, dadurch gekennzeichnet, daß bei Luft- und Raumfahrzeugen die asymmetrische Feinstruktur (10, 10a) in jenen Bereichen angeordnet ist, in denen entweder eine dünne Grenzschicht mit hohem Reibwert oder eine hohe örtliche Geschwindigkeit gegeben ist, insbesondere aber im Bereich der Flügelsaugseite.

## Revendications

1. Dispositif pour la réduction de la traînée de friction, en matière de mécanique des fluides, de véhicules aériens, spatiaux et navals, présentant une structure fine asymétrique (10, 10a) ayant la forme d'un profil rainuré, appliqué sur une surface sur laquelle s'écoule un fluide, s'étendant transversalement à la direction de l'écoulement, dont les flancs faiblement inclinés sont attaqués par l'écoulement, caractérisé en ce que la hauteur de rainure ne dépasse pas sensiblement le parcours libre moyen de la molécule du fluide ou le parcours libre des quantités de liquide.

2. Dispositif selon la revendication 1, caractérisé en ce que la structure fine asymétrique (10, 10a) est microscopique, en vue d'exercer une influence sur la direction d'émission de la molécule, ou macroscopique, en vue d'exercer une influence sur le comportement en déflexion des quantités de liquide.

3. Dispositif selon la revendication 1 ou 2, caractérisé en ce que le profil rainuré de la structure fine (10) microscopique asymétrique est, de plus, pourvue de sous-rainures (11) asymétriques.

4. Dispositif selon les revendications 2 et 3, caractérisé en ce que le profil rainuré de la structure fine macroscopique asymétrique (10a) est tridimensionnel.

5. Dispositif selon les revendications 1 à 4, caractérisé en ce que la structure fine asymétrique (10, 10a) présente une structure en dents de scie et est appliquée sous forme de feuilles collables.

6. Dispositif selon une ou plusieurs des revendications 1 à 5, caractérisé en ce que la structure fine asymétrique (10, 10a) est élaborée par estampage, laminage, sablage ou par lithographie au laser et/ou aux rayons X.

7. Dispositif selon une ou plusieurs des revendications 1 à 6, caractérisé en ce que la structure fine asymétrique (10, 10a) est réalisée sous la forme d'une nappe textile à fibres orientées vers l'aval.

8. Dispositif selon une ou plusieurs des revendications 1 à 7, caractérisé en ce que la surface de la structure fine (10, 10a) asymétrique est revêtue ou imprégnée d'une couche hydrophobe.

9. Dispositif selon une ou plusieurs des revendications 1 à 8, caractérisé en ce que, dans le cas de véchicules aériens ou spatiaux, la structure fine asymétrique (10, 10a) est disposée dans les zones dans lesquelles on a, soit une couche limite mince à coefficient de frottement élevé, soit une vitesse locale élevée, mais en particulier dans la zone de l'extrados.

## Claims

1. An arrangement for the reduction of flow-related frictional drag in air-, space — and water craft having, applied to the surface over which a medium flows, an asymmetric fine-structure (10, 10a) running transversely to the direction of flow and of groove shape, the medium flowing against the gently-sloped groove sides, characterised in that the groove depth does not substantially exceed the mean free path of the molecules of the medium or the mean free path of the liquid drops.

2. An arrangement according to claim 1, characterised in that the asymmetric fine-structure (10, 10a) is arranged to influence the mean emission direction of the molecules microscopically or to influence the reflective behaviour of the liquid drops macroscopically.

3. An arrangement according to claim 1 or 2, characterised in that the groove shape of the asymmetric microscopic fine-structure (10) is additionally provided with asymmetric sub-grooves.

4. An arrangement according to claims 2 and 3, characterised in that the groove shape of the asymmetric macroscopic fine-structure (10, 10a) has a three-dimensional construction.

5. An arrangement according to claims 1 to 4, characterised in that the asymmetric fine-structure (10, 10a) has a saw-tooth structure and is arranged in the form of an adhesive foil.

7

6. An arrangement according to one or more of claims 1 to 5, characterised in that the asymmetric fine-structure (10, 10a) is produced by stamping, rolling, sand-blasting or by means of laser- and/or X-ray lithography.

7. An arrangement according to one or more of claims 1 to 6, characterised in that the asymmetric fine-structure (10, 10a) is constructed as a fibre coat with fibres directed downstream.

8. An arrangement according to one or more of claims 1 to 7, characterised in that the surface of the asymmetric fine-structure (10, 10a) is covered or impregnated with a water-repellent layer.

9. An arrangement according to one or more of claims 1 to 8 characterised in that in air- and space-craft the asymmetric fine-structure (10, 10a) is arranged in those regions in which there is either a thin boundary layer with a high frictional value or high local velocity, especially in the region of the suction side of the wing.

EP 0 212 167 B1

FIG.1

FIG.2

FIG. 3

FIG. 4

Strömungsrichtung

10a

ca. Grenzschichtdicke / 10

10a

ca. Grenzschichtdicke / 10

# FIG. 5

# FIG. 6

$\vec{V}_\infty$

y

A    x    k         K                    B

$dl_K$

$r_{iK}$   $\Theta_{iK}$

$dl_i$   i    $\Theta_{ij}$

$r_{ij}$   $dl_j$   $\Theta_j$

j

P

4